# EUROPÄISCHE PATENTSCHRIFT

(11) **EP 1 907 697 B1**
(45) Veröffentlichungstag und Bekanntmachung des Hinweises auf die Patenterteilung: **22.02.2012**
(21) Anmeldenummer: 06762556.6
(22) Anmeldetag: 12.07.2006
(51) Int. Cl.: F03D 9/00

(54) **LEISTUNGSREGELUNG EINES WINDPARKS**
POWER CONTROL OF A WIND PARK
COMMANDE DE PUISSANCE D'UN PARC EOLIEN

(30) Priorität: 13.07.2005 DE 102005032693
(43) Veröffentlichungstag der Anmeldung: 09.04.2008
(73) Patentinhaber: REpower Systems AG, 22335 Hamburg (DE)
(72) Erfinder: FORTMANN, Jens, 13156 Berlin (DE); ALTEMARK, Jens, 24768 Rendsburg (DE); ZEUMER, Jörg, 24768 Rendsburg (DE)
(74) Vertreter: Glawe, Delfs, Moll
(86) Internationale Anmeldenummer: PCT/EP2006/006821
(87) Internationale Veröffentlichungsnummer: WO 2007/006565

(56) Entgegenhaltungen:
- EP-A- 0 877 475
- EP-A- 1 519 040
- WO-A-01/25630
- WO-A-02/086314
- WO-A-03/030329

## Beschreibung

Die Erfindung betrifft ein Verfahren zum Regeln einer Windenergieanlage, die einen mittels eines Rotors angetriebenen Generator und einen daran angeschlossenen Umrichter sowie eine Steuerung aufweist, wobei die Steuerung mit einem Leistungsregelmodul die über eine Verbindungsstrecke in ein Energieübertragungsnetz abgegebene Leistung regelt, oder eines Windparks. Die Erfindung betrifft ferner eine nach diesem Verfahren betriebene windenergieanlage bzw. Windpark. Aus WO 01/25630 A and WO 02/086314 A sind Windenergieanlagen and entsprechende Betriebsverfahren bekannt.

Zur Erzeugung elektrischer Energie mittels Windenergie in größerem Maßstab werden Windenergieanlagen mit immer höherer Leistung hergestellt. Häufig werden mehrere an einem Standort aufgestellte Windenergieanlagen zu einem Windpark zusammengefasst. Allerdings ist es so, dass gerade die zur Aufstellung von Windenergieanlagen oder Windparks hoher Leistung geeigneten windstarken Standorte, in ländlichen, dünn besiedelten Gebieten liegen. Dort weist das Energieübertragungsnetz der Energieversorgungsunternehmen in der Regel nur eine geringe Übertragungsleistung auf. Das führt nicht selten dazu, dass aufgrund der beschränkten Übertragungskapazität des Energieübertragungsnetzes entsprechende Restriktionen für den Betrieb gelten. Die Betriebsgrenzen eines Energieübertragungsnetzes werden durch Leistungsgrenzen der Leitungen sowie dazwischen geschalteter Komponenten, wie Transformatoren, bestimmt. Die Betriebsgrenzen des Energieübertragungsnetzes erzwingen eine Limitierung, die verhindert, dass bei günstigen Windbedingungen die vollständige Leistung der Windenergieanlage oder des Windparks ausgenutzt werden kann. Das führt zu wirtschaftlichen Nachteilen.

Der Erfindung liegt die Aufgabe zugrunde, eine Windenergieanlage oder einen Windpark sowie ein Verfahren zum Betreiben zu schaffen, die eine bessere Ausnutzung ermöglichen.

Die erfindungsgemäße Lösung liegt in den Merkmalen der unabhängigen Ansprüche. Vorteilhafte Weiterbildungen sind Gegenstand der abhängigen Ansprüche. Die Erfindungsgemäß betrifft ein Verfahren zur Regelung einer Windenergieanlage, die einen mittels eines Rotors angetriebenen Generator und einen daran angeschlossenen Umrichter sowie eine Steuerung aufweist, wobei die Steuerung mittels eines Leistungsregelmoduls die über eine Verbindungsstrecke in ein Energieübertragungsnetz abgegebene Leistung regelt und Einrichtungen zur Messung der eingespeisten Leistung aufweist, wobei, ein Maximalstrom der Verbindungsstrecke bestimmt ist, und wobei vorgesehen ist, daß eine bei der in das Netz abgegebenen Leistung bis zum Maximalstrom verbleibende Stromreserve ermittelt wird und ein Korrekturwert zum Nachregeln der abgegebenen Leistung abhängig von der Stromreserve bestimmt wird.

Der Kern der Erfindung liegt in dem Gedanken, die verfügbare Kapazität der Verbindungsstrecke zum Anschluss an das Energieübertragungsnetz stets voll auszunutzen, und zwar möglichst unabhängig von dem jeweiligen Betriebszustand. Sie fußt auf der Erkenntnis, dass die Betriebsgrenzen vieler für den Netzanschluss an das Energieübertragungsnetz verwendeter Komponenten, wie Kabel oder Transformatoren, durch ihre jeweiligen thermischen
Grenzen bestimmt sind. Um Betriebssicherheit zu gewährleisten, darf die in den einzelnen Komponenten entstehende Verlustleistung auch unter ungünstigen Bedingungen einen jeweils kritischen Wert nicht überschreiten. Bei der Bestimmung des kritischen Wertes ist zu beachten, dass die Spannung in einem Netz keine Konstante ist, sondern einen beachtlichen Variationsbereich aufweist. So kann die Spannung im Hochspannungsnetz gemäß einschlägigen Richtlinien des Verbands der Netzbetreiber (Transmission Code 2003) um +10 %/-13 % von der Nennspannung abweichen. Um in jedem Fall die Betriebssicherheit zu gewährleisten, erfolgt klassischerweise eine Auslegung auf den ungünstigsten Punkt des Bereichs. Darauf basierend wird die zulässige Einspeiseleistung berechnet, gegebenenfalls unter Berücksichtigung zusätzlicher Blindleistungslieferung bzw. -bezug. Die Erfindung hat erkannt, dass bei dieser Berechnungsweise die Komponenten nicht voll ausgenutzt werden. Basierend auf der bekannten Formel für die in einer Komponente mit einem komplexen Widerstand entstehende Verlustleistung P_{V} = IN x I_{N} / real (Z_{L}) ergibt sich die Erkenntnis, dass die höchste Verlustleistung dann auftritt, wenn in dem Energieübertragungsnetz die niedrigste zulässige Spannung auftritt (gemäß der bekannten Beziehung P = U x I). Dann fließt der größte Strom (Maximalstrom). Die Erfindung hat erkannt, dass bei jedem anderen, höheren Spannungswert die tatsächlich in der Komponente entstehende Verlustleistung aufgrund des dann niedrigeren Stromwerts geringer ist. Liegt die Spannung z.B. genau auf dem Nennwert, so fließt nicht mehr der Maximalstrom, sondern ein gemäß der Beziehung P = U x I verminderter Strom. Sein Betrag verhält sich umgekehrt proportional zur Spannung. Es ergibt sich eine Differenz zwischen dem tatsächlich fließenden Strom im Bereich des Nennpunkts und dem berechneten Maximalstrom. Es besteht somit eine Stromreserve. Die Erfindung nutzt diese Stromreserve zur Erhöhung der tatsächlich in das Energieübertragungsnetz übertragenen Leistung. Der erreichbare Gewinn hängt von der tatsächlich vorhanden Netzspannung in Bezug auf die niedrigste zulässige Spannung ab. Betragen, wie oben erläutert, die zuläsigen Spannungsabweichungen +10 und -13 % von der Nennspannung, so ergibt sich bei einer tatsächlichen Spannung im Energieübertragungsnetz in der Höhe der Nennspannung eine Stromreserve von 13 %. Durch die erfindungsgemäße Ausnutzung dieser Stromreserve kann die übertragene Leistung um 13 % erhöht werden, ohne dass es weshalb zu einer Überlastung der Komponenten führt. Liegt die tatsächliche Spannung über der Nennspannung am oberen zulässigen Wert, so beträgt die Stromreserve sogar 23 %. Damit ist es gemäß der Erfindung ermöglicht, sogar fast ¼ mehr Leistung in das Energieübertragungsnetz zu übertragen, ohne dass die zulässigen Verlustleistungen überschritten werden. Mit einer solchen Steigerung der möglichen Übertragungsleistung kann die Ausnutzung des Windparks deutlich verbessert werden. Damit erhöht sich auch die Wirtschaftlichkeit des Betriebs.

Zweckmäßigerweise ist eine Begrenzungseinrichtung vorgesehen, die beim Erreichen des Maximalstroms in Abhängigkeit von einem Selektionssignal einen Phasenwinkel zwischen in das Energieübertragungsnetz abgegebenen Strom und Netzspannung einstellt. Der Gesamtbetrag des Stroms bleibt hierbei fest, nämlich auf Höhe des Maximalstroms, verändert wird der Winkel zwischen Strom und Spannung. Damit kann erreicht werden, dass mit dem Selektionssignal vorgegeben werden kann, ob vorrangig Wirkleistung oder vorrangig Blindleistung in das Netz eingespeist werden soll. Mit dem Selektionssignal kann somit ausgewählt werden, ob einem höheren Ertrag durch höhere Wirkleistungseinspeisung oder einer Spannungsstützung des Netzes durch höhere Blindleistungseinspeisung der Vorzug gegeben werden soll. Zweckmäßigerweise wird das Selektionssignal mittels einer Spannungsstatik generiert. Sie ermöglicht es, den zur Netzstützung erforderlichen Blindleistungsbedarf zu ermitteln. Darauf basierend kann dann entschieden werden, ob der Wirk- oder der Blindleistungslieferung der Vorrang zu geben ist. Alternativ oder zusätzlich kann aber auch vorgesehen sein, das Selektionssignal von extern zuzuführen, insbesondere durch den Netzbetreiber. Damit ist es dem Netzbetreiber ermöglicht, in Abhängigkeit von dem Zustand des Energieübertragungsnetzes zu entscheiden, ob mehr Wirk-oder mehr Blindleistung benötigt wird und eingespeist werden soll.

In Abhängigkeit von der jeweils abgeforderten Wirk- oder Blindleistung kann der jeweils andere Parameter, also Blind- bzw. Wirkleistung, mittels einer vorgebbaren Kennlinie bestimmt werden. Dazu kann ein Kennlinienmodul vorgesehen sein, welches beispielsweise in die Spannungsstatik integriert ist. Es ist dazu ausgebildet, in Abhängigkeit von einer Größe, beispielsweise der Wirkleistung, die andere Größe, beispielsweise die Blindleistung, anhand der eingegebenen Kennlinie zur ermitteln. Die Kennlinie ist an sich frei wählbar. Bevorzugt handelt es sich hierbei um eine Ellipsenfunktion, die zweckmäßigerweise auf die maximale Leistung normiert ist die wie folgt lautet: 1 = P²:a² + Q²:b². Durch die Wahl. der Koeffizienten a, b kann Bevorzugung der Wirk- bzw. Blindleistungseinspeisung erreicht werden.

Zweckmäßigerweise wird ein Zusatzstrom zur Kompensation von Leitungskapazitäten bestimmt und zusätzlich eingespeist. Dieser Strom kann unabhängig von der Netzspannung und der Strombegrenzung bzw. der aktuellen Wirkstromeinspeisung bestimmt werden. Vorzugsweise geschieht dies über die Formel iq = U/Z = U x jwc berechnet werden. Dieser Strom dient zur Kompensation der kapazitiven Lasten windenergieanlagenseitig der Verbindungsstrecke und bleibt damit ohne Einfluss auf die Strombegrenzung zum Netz hin. Die Kompensation dieser kapazitiven Last ist insbesondere bei der Zusammenschaltung mehrerer Windenergieanlagen zu einem Windpark von Bedeutung.

zweckmäßigerweise-wird ein Begrenzungssignal an die Windenergieanlage zur Begrenzung des von ihr abzugebenen Stroms angelegt. Es kann beispielweise im Bereich von 0 bis 100 % des zulässigen Stroms liegen. Damit wind direkt an der Quelle der elektrischen Leistung eingegriffen, und zwar insbesondere in Bezug auf den Wirkstromanteil. Zweckmäßigerweise wird bei der Bestimmung des Begrenzungssignals der komplexe widerstand der Leitung zur Windenergieanlage mit einbezogen.

Die Erfindung betrifft ferner ein Verfahren zum Regeln eines windparks mit einem Parkmaster und mindestens einer Windenergieanlage mit den Merkmalen der Ansprüche 1 bis 8.

Zweckmäßigerweise werden für die einzelnen Windenergieanlagen unterschiedliche Korrekturwerte ermittelt. Zwar kann der Korrekturwert auch für alle Windenergieanlagen eines Parks gleich vorgegeben werden, in der Regel ist es jedoch günstiger, die jeweiligen Anteile an Wirk- und Blindleistung zwischen den verschiedenen Windenergieanlagen unterschiedlich vorzugeben. Damit können Verluste verringert und eine höhere Ausnutzung erreicht werden.

Weiterhin ist es zweckmäßig, individuelle Begrenzungssignale für die Windenergieanlagen zu ermitteln und anzulegen. Auch damit kann eine Optimierung der Gesamtparkleistung erfolgen, indem in besonders leistungsstarken Windenergieanlagen höhere Grenzwerte vorgegeben werden als in leistungsschwachen Anlagen des Windparks. Hierbei beziehen sich leistungsstark und leistungsschwach nicht nur auf die konstruktive Auslegung der einzelnen Windenenergieanlagen, sondern umfassen auch ortsabhängige Parameter, wie besonders günstige Lage zum Wind etc.

Die Erfindung bezieht sich weiter auf eine Windenergieanlage sowie einen Windpark zur Durchführung des oben genannten Verfahrens.

Die Erfindung wird nachfolgend unter Bezugnahme auf die Zeichnung erläutert, in der vorteilhafte Ausführungsbeispiele dargestellt sind. Es zeigen:
- Fig. 1: eine schematische Ansicht einer Windenergieanlage gemäß einem ersten Ausführungsbeispiel der
- /: Erfindung;
- Fig. 2: ein Leistungsdiagramm der von der Windenergieanlage gemäß Fig. 1 über der Spannung eingespeisten Leistung;
- Fig. 3: eine schematische Detailansicht zur Bestimmung eines Korrekturwerts gemäß dem ersten Ausführungsbeispiel; und
- Fig. 4: eine schematische Detailansicht eines Kennlinienmoduls;
- Fig. 5: eine schematische Ansicht eines Windparks gemäß einem zweiten Ausführungsbeispiel der Erfindung.

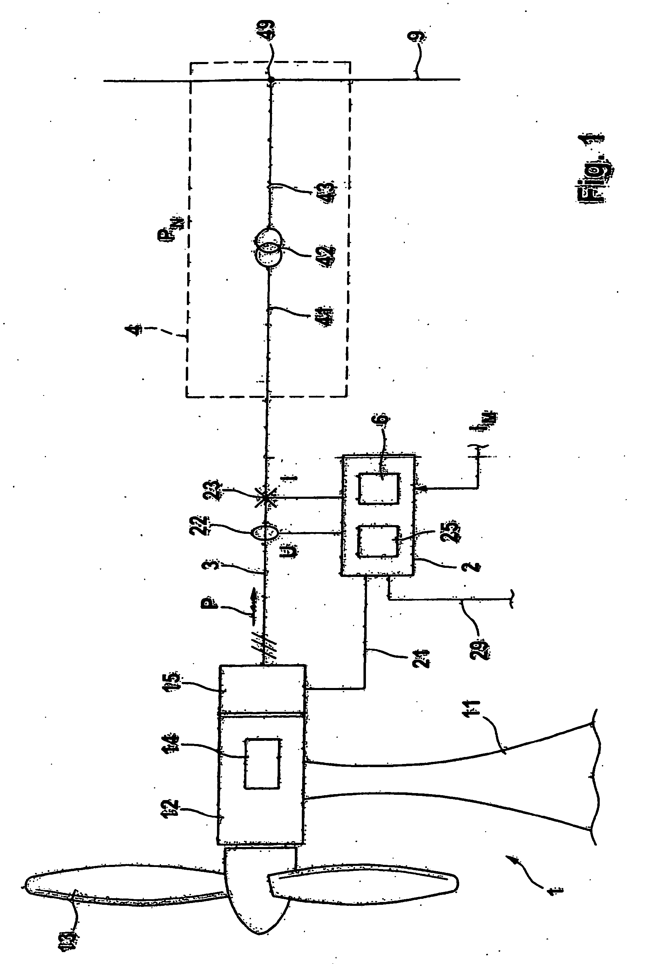

Bei der in Fig. 1 dargestellten Windenergieanlage handelt es sich um einen Grundaufbau, einer konventionellen drehzahlvariablen Windenergieanlage. Die Windenergieanlage 1 umfasst einen Turm 11 mit einem darauf angeordneten Maschinenhaus 12. An dessen einer Stirnseite ist ein Rotor 13 drehbar gelagert und über eine Antriebswelle (nicht dargestellt) mit einem Generator 14 verbunden. Bei dem Generator 14 handelt es sich vorzugsweise um eine doppelt gespeiste Asynchronmaschine, es können aber auch andere Bauarten wie Synchron-, Asynchronmaschinen oder permanenterregte Maschinen verwendet werden. Der generator 14 ist elektrisch mit einem Umrichter 15 und weiter mit einer Leitung 3 verbunden. Der Umrichter 15 kann als Voll- oder als Teilumrichter ausgeführt und geschaltet sein. Zur Steuerung ist.an der Windenergieanlage 1 eine Steuerung 2 vorgesehen. Sie ist zur Verdeutlichung abgesetzt von der Windenergieanlage 1 dargestellt, tatsächlich ist sie räumlich in der Regel an der Windenergieanlage 1 selbst vorgesehen, häufig sogar in dem Maschinenhaus 12 angeordnet. Die Steuerung 2 ist dazu ausgebildet, die Windenergieanlage 1 gemäß einstellbarer Vorgabe zu betreiben. Die Vorgaben können intern festgelegt sein oder von extern über einen Anschluss 29 zugeführt werden. Dieser ist häufig als ein Datenanschluss mittels eines Modems ausgeführt, so dass Zugriff über ein Telefon- oder Datennetzwerk oder auch eine drahtlose Datenübertragung ermöglicht ist. Die Steuereinrichtung 2 ist mit Messeinrichtungen versehen, von denen exemplarisch eine Spannungsmesseinrichtung 22 und eine Stromesseinrichtung 23 in der Leitung 3 dargestellt sind. Sie dienen zur Ermittlung der von der Windenergieanlage 1 in die Leitung 3 abgegebenen Leistung und zur ensprechenden Regelung der Windenergieanlage 1. Weitere Messeinrichtungen können vorgesehen sein, sind aus Gründen der Übersichtlichkeit aber nicht dargestellt.

Die von der Windenergieanlage 1 in die Leitung 3 abgegebene elektrische Leistung wird über eine Verbindungsstrecke 4 in ein Energieübertragungsnetz 9 übertragen. Die Verbindungsstrecke 4 dient zur Anbindung der Windenergieanlage 1 an das Energieübertragungsnetz 9. Je nach Standort der Windenergieanlage 1 in Bezug auf das Energieübertragungsnetz 9 kann die Verbindungsstrecke 4 eine mitunter beträchtliche Erstreckung aufweisen. Entfernungen über mehrere Kilometer sind hier keine seltenheit. Bei Offshore-Anlagen können die Entfernungen bis zu 100 km betragen, hier werden aus Sicherheitsgründen häufig parallele Verbindungsstrecken vorgesehen. Die dargestellte Verbindungsstrecke 4 besteht aus einer Mittelspannungsleitung 41, einem Transformator 42 und einer Hochspannungsleitung 43 und einem Verknüpfungspunkt 49 mit dem Energieübertragungsnetz 9. Bei dem dargestellten Ausführungsbeispiel handelt es sich bei dem Energieübertragungsnetz 9 um ein Hochspannungsnetz. Ist der Anschluss an ein Mittelspannungs- oder Niederspannungsnetz vorgesehen, so kann der Transformator 42 entfallen.

Die Steuerung 2 der Windenergieanlage 1 weist ein Leistungsregelmodul 25 auf. Es ist dazu ausgebildet, die Windenergieanlage gemäß internen vorgaben und/oder extern vom Betreiber des Energieübertragungsnetzes 9 über den Anschluss 29 angelegten Vorgaben zu betreiben. Dazu wirkt das Leistungsregelungsmodul 25 auf den Umrichter 15 ein, gegebenenfalls auch auf den Rotor 13. Zur Messung der von der Windenergieanlage 1 in die Leitung 3 abgegebenen Leistung dienen die Messeinrichtungen 22, 23. Mit ihnen kann die gesamte abgegebene elektrische Leistung, der Wirkleistungsanteil sowie der Blindleistungsanteil bestimmt werden. Damit können auch spezifische Vorgaben bezüglich der abzugebenden Wirkleistung und Blindleistung erfüllt werden.

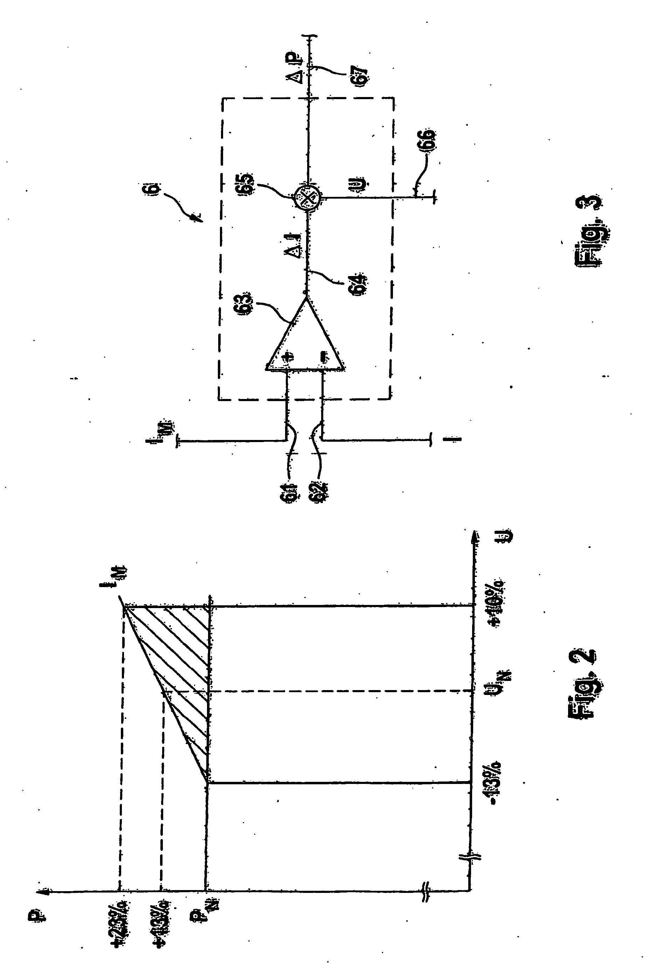

Die Übertragungsstrecke 4 ist für eine bestimmte Nennleistung P_{N} ausgelegt. Diese Nennleistung kann durch die maximal an dem Verknüpfungspunkt 49 in das Energieübertragungsnetz abgebbare Leistung bestimmt sein, sie kann aber auch durch die Dimensionierung der einzelnen Komponenten der Verbindungsstrecke 4, wie Leitungen oder Transformatoren, bestimmt sein. Mit dieser Nennleistung ist sichergestellt, dass bei Einhaltung der Normbedingungen für die Spannung im Energieübertragungsnetz 9 keine Überlastung auftritt. Die Erfindung macht sich nun zunutze, dass die Leistungsbegrenzung dieser Komponenten in der Regel aus der thermischen Belastung durch Verlustleistung bestimmt ist. Um einen sicheren Betrieb zu gewährleisten, darf die Verlustleistung auch unter ungünstigen Bedingungen eine bestimmte kritische Grenze nicht überschreiten. Hierbei ist zu berücksichtigen, dass die Spannung in Netz 9 nicht konstant ist. Wie man aus Fig. 2 erkennt, gibt es einen Toleranzbereich um die Nennspannung. Bei Hochspannungsnetzen beträgt er beispielsweise gemäß den einschlägigen Richtlinien des Verbandes der Netzbetreiber VDN (Transmission Code 2003) +10 und -13 % der Nennspannung. In diesem Bereich muss das Spannungsnetz mitsamt seinen zugeordneten Komponenten sicher arbeiten. Entsprechend ist die Verbindungsstrecke 4 ausgelegt. Das bedeutet, das die Verbindungsstrecke 4 die Nennleistung P_{N} auch dann übertragen können muss, wenn die Spannung am unteren Ende des Spannungsbandes liegt, also beispielsweise 13 % unter Nennspannung liegt. Der dabei zu übertragende maximale Strom ergibt sich aus der Beziehung P = U x I zu I_{N} = P_{N} / (U_{N} x 0,87). Dieser maximale Strom ist 13 % größer als der Nennstrom, der sich bei einer Berechnung gemäß IN = P_{N} / U_{N} ergibt. Das bedeutet, dass die Verbindungsstrecke auf einen um 13 % höheren Strom ausgelegt ist als der sich bei Nennleistung P_{N} und Nennspannung U_{N} rechnerisch ergebende Nennstrom IN.

Betreibt man die Übertragungsstrecke 4 nun mit der Maßgabe, dass zur Einhaltung der zulässigen Verlustleistung der Maximalstrom I_{M} nicht überschritten wird, so ergibt sich ausgehend von dem unteren Grenzwert für die Netzspannung ein mit höherer Spannung ansteigender Leistungsgewinn. Er ist in Fig. 2 als schraffierter Bereich dargestellt. Liegt die Spannung im Energieübertragungsnetz 9 tatsächlich auf Höhe des Nennwerts, so ergibt sich damit ein Gewinn gegenüber der Nennleistung P_{N} von 13 % und in dem Fall, wenn die tatsächliche Spannung im Energieübertragungsnetz 9 den oberen Toleranzwert erreicht, ein Gewinn von 23 %. Die Erfindung macht sich zunutze, dass dabei trotz der Überschreitung der Nennleistung um beinah % die durch den Strom I_{M} bestimmte Verlustleistung im zulässigen Bereich bleibt, so dass keine Überlastung der Übertragungsstrecke 4 vorliegt. Die Erfindung ermöglicht damit ohne bauliche Veränderungen eine erheblich bessere Ausnutzung einer gegebenen Übertragungsstrecke 4. Um die Windenergieanlage 1 in dieser Betriebsart unter Einhaltung des Maximalstroms I_{M} zu betreiben, ist eine Zusatzleistungseinrichtung 6 vorgesehen.

Die Zusatzleistungseinrichtung 6 ist in ihrem schematischen Aufbau in Fig. 3 detailliert dargestellt. Sie umfasst ein Differenzglied 63 sowie ein Multiplizierglied 65 als Hauptbestandteile. An einen Eingang 61 des Differenzglieds 63 ist ein Eingabewert für den Maximalstrom I_{M} angeschlossen. Dieser Eingabewert kann über eine manuelle Einheit eingegeben werden, aus einem Speicherbereich von der Steuerung 2 oder von extern zur Verfügung gestellt werden, und kann dabei auch zeitlich variiert werden. An einen anderen Eingang 62 ist der tatsächlich über die Leitung 3 in die Verbindungsstrecke 4 fließende Strom angelegt. Das Differenzglied 63 ermittelt daraus eine Stromreserve ΔI und legt sie über eine Verbindungsleitung 64 and das Multiplizierglied 65 an. An einem weiteren Anschluss des Multiplizierglieds 65 ist die Spannung U an der Verbindungsleitung 3 über einen Anschluss 66 angelegt. Daraus wird ein Korrekturwert ΔP für die abgebbare Leistung berechnet und an einem Ausgang 67 ausgegeben. Dieser Ausgangsanschluss 67 ist mit dem Leistungsregler 25 der Steuereinrichtung 2 verbunden. Damit kann die von der Windenergieanlage abgegebene Leistung entsprechend erhöht werden.

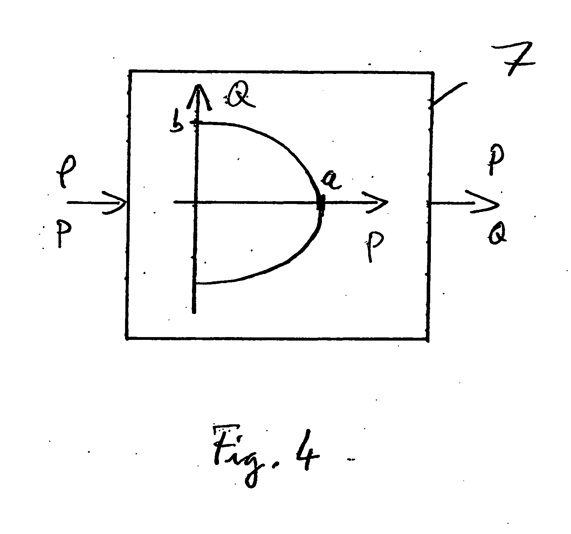

Fig. 4 ist ein Kennlinienmodul 7 dargestellt. Es dient dazu, anhand eines vorgebbaren Werts für die zu übertragende Wirkleistung eine unter Beachtung der Grenzwerte noch übertragbare Blindleistung zu ermitteln. Im Kennlinienmodul 7 ist dazu eine elliptische Kennlinie implementiert. Sie folgt der Beziehung 1 = P²:a² + Q²:b², der in der Darstellung bezogen auf die maximal übertragbare Leistung ist. Über die Vorgabe eines Wirkleistungsanteils P oder eines Phasenwinkels ϕ ermöglicht es das Kennlinienmodul 7, anhand der implementierten elliptischen Kennlinie das jeweilige Höchstwertepaar für Wirkleistung P und Blindleistung Q zu ermitteln. Das Kennlinienmodul 7 kann in der Steuerung 2 der Windenergieanlage oder im Fall eines Windparks mit mehreren Windenergieanlagen zweckmäßigerweise in dem Parkmaster 5 vorgesehen sein.

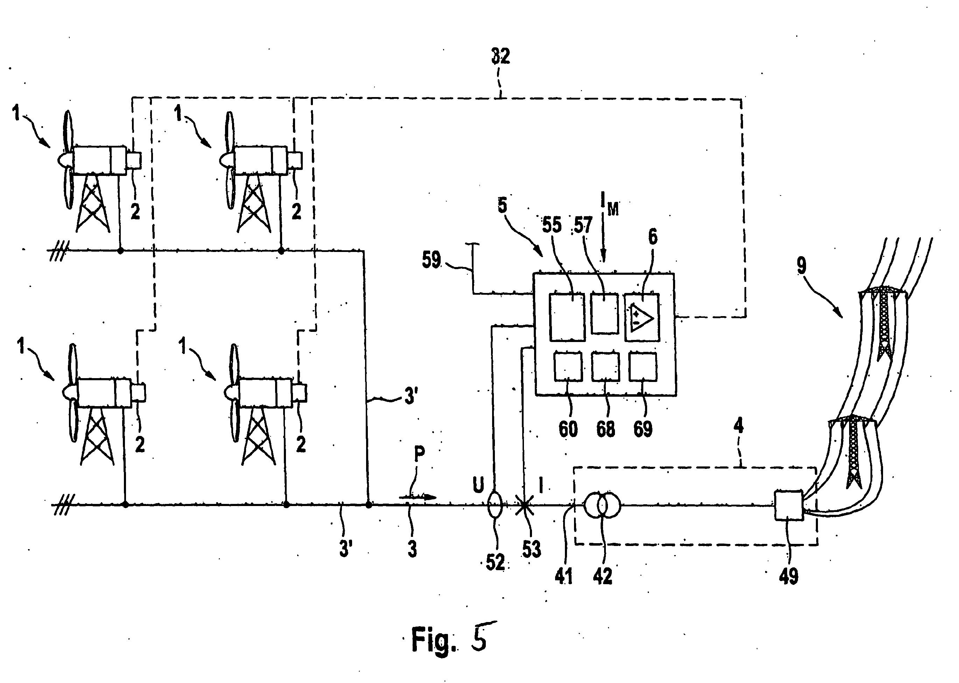

Zunächst wird auf die schematische Darstellung eines gemäß der Erfindung ausgeführten Windparks in Fig. 5 Bezug genommen. Dort sind exemplarisch vier Windenergieanlagen 1 dargestellt, die über zwei Äste 3' der Leitung 3 angeschlossen sind. Bezüglich des Aufbaus und der Funktionsweise der einzelnen Windenergieanlagen wird auf die vorstehenden Darstellungen verwiesen. Unterschiede werden nachfolgend erläutert.

Zusätzlich zu den Windenergieanlagen 1 weist der Windpark einen Parkmaster 5 auf. Dieser stellt eine übergeordnete Betriebsführung für sämtliche Windenergieanlagen 1 des Windparks bereit und überwacht den Anschluss des Windparks an das Energieübertragungsnetz 9. vorgaben von außen, wie beispielsweise solche des Betreibers des Energieübertragungsnetzes 9, werden über einen Anschluss 59 an den Parkmaster 5 angelegt und nicht mehr direkt an die einzelnen Windenergieanlagen 1 übermittelt. Der Parkmaster 5 ermittelt anhand der Betriebsbedingungen und der Vorgaben Sollgrößen für den Betrieb der einzelnen Windenergieanlagen 1. Sie werden über eine Kommunikationsverbindung 32 an die Steuereinrichtung 2 der einzelnen windenergieanlage 1 übermittelt. Dazu ist das Leistungsregelmodul 55 in dem Parkmaster 5 vorgesehen. Weiter ist in dem Parkmaster 5 die Zusatzleistungseinrichtung 6 angeordnet. Es entspricht in seinem Aufbau im Wesentlichen dem bei der einzelnen Windenergieanlage 1 gemäß dem Ausführungsbeispiel in Fig. 1 dargestellten Ausführungsbeispiel. Dementsprechend sind an dem Parkmaster 5 Eingangsanschlüsse zur Eingabe des Maximalstroms I_{M} und Messeinrichtungen 52, 53 für Strom und Spannung vorgesehen. Dementsprechend ist der Ausgangsanschluss 67 der Zusatzleistungseinrichtung 6 über die Steuerleitungen 32 mit den Steuereinrichtungen 2 der einzelnen Windenergieanlagen 1 verbunden.

Weitere optionale Funktionen seien anhand des zweiten Ausführungsbeispiels erläutert. In dem Parkmaster 5 ist zusätzlich eine Begrenzungseinrichtung 68 vorgesehen. Sie ist dazu ausgebildet, dass bei einem Anstieg des in der Leitung 3 fließenden Stroms auf den Wert des Maximalstroms I_{M} in Abhängigkeit von einem Selektionssignaleingang 59 ein Phasenwinkel zwischen dem Strom I und der Netzspannung U_{N} eingestellt wird. Dieser Phasenwinkel bestimmt sich entsprechend dem Selektionssignal derart, dass entweder vorrangig Wirkleistung (Phasenwinkel möglichst klein) oder vorrangig Blindleistung (Betrag der Phasenwinkel im Bereich von 90°) in das Energieübertragungsnetz 9 eingespeist wird. Dadurch kann mittels des Selektionssignals am Eingang 59 eingestellt werden, ob der Lieferung von Wirkleistung oder der Lieferung von Blindleistung der Vorrang eingeräumt wird. Das Selektionssignal kann vom Betreiber bzw. dem Betreiber des Energieübertragungsnetzes 9 von außen angelegt sein. Es kann aber auch vorgesehen sein, dass es anhand einer Spannungs-Phasenwinkel-Kennlinie ermittelt wird. Dazu ist ein Kennlinienmodul (nicht dargestellt) in dem Parkregler 5 vorgesehen, das aus der Spannung einen Blindleistungsbedarf ermittelt und demnach das Selektionssignal einstellt.

Weiter kann in dem Parkregler 5 ein überlagerter Spannungsregler 69 vorgesehen sein. An seinen Eingang ist die Messeinrichtung 52 für die Spannung angeschlossen. Er dient dazu, Spannungsanstiege am Punkt 41 infolge von ohmschen oder induktiven Verlusten aufgrund des höheren Stroms IM zu erkennen und entsprechend entgegenzuwirken. Dies kann geschehen durch Eingriff in das Zusatzstrommodul 6 und Reduktion der abgegebenen Leistung, oder aber vorzugsweise durch Vorgabe eines größeren Blindleistungsanteil an die Steuerungseinrichtungen 2 der einzelnen Windenergieanlagen 1.

In dem Parkregler 5 kann weiter ein Kompensationsstrommodul 57 vorgesehen sein. Es ist dazu ausgebildet, durch selektive Zuordnung der Blindleistung zu den einzelnen Windenergieanlagen den Effekt der Leitungskapazitäten der Leitungen 3 bzw. 3' zu kompensieren. Diese Kompensation zielt auf das Innere des Windparks, d. h. windenergieanlagenseitig der Verbindungsstrecke 4. Das Modul bestimmt den zur Kompensation erforderlichen Blindstrom, und zwar entweder geregelt durch Messung mittels der Messeinrichtungen 52, 53 oder gesteuert gemäß der Beziehung iq = U/Z = U x j x wC (wobei Z der komplexe Widerstand der Leitungen 3, 3' und C deren Frequenz ist, und w für die Kreisfrequenz 2 x π x f steht). Dadurch wird erreicht, dass auch eine im Windpark weit entfernt von der Verbindungsstrecke 4 angeordnete Windenergieanlagen 1 trotz der sich aus der Leistungskapazität ergebenden Gefahr von Spannungsanstiegen (bis hin zur Überspannung an der jeweiligen Windenergieanlage) eine möglichst große Wirkleistung in das Energieübertragungsnetz 9 einspeisen kann.

Vorzugsweise ist an dem Parkmaster 5 weiter eine Einzelvorgabeeinrichtung 60 angeordnet. Sie wirkt mit der zusatzleistungseinrichtung 6 in der Weise zusammen, dass für die einzelnen Windenergieanlagen 1 individuelle Vorgabewerte für den von ihnen zu liefernden Maximalstrom übermittelt werden. Dadurch könnten bestimmte Windenergieanlagen zur vermehrten Bereitstellung von Wirkleistung herangezogen werden, während andere zur vermehrten Bereitstellung von Blindleistung herangezogen werden. Damit kann eine Anpassung an die jeweiligen Besonderheiten der einzelnen Windenergieanlagen erfolgen, beispielsweise können an besonders windgünstigen Standorten positionierte Windenergieanlagen zur vermehrten Bereitstellung von Wirkleistung herangezogen werden, während die übrigen vermehrt Blindleistung bereitstellen. Damit, lässt sich die Ausnutzung des Windparks und damit die Wirtschaftlichkeit weiter steigern.

## Patentansprüche

1. Verfahren zum Regeln einer Windenergieanlage (1), die einen mittels eines Rotors (13) angetriebenen Generator (14) und einen daran angeschlossenen Umrichter (15) sowie eine Steuerung (2, 5) aufweist, wobei die Steuerung (2, 5) mit einem Leistungsregelmodul (25, 55) die über eine Verbindungsstrecke (4) in ein Energieübertragungsnetz (9) abgegebene Leistung innerhalb eines Grenzwerts regelt, wobei für die Verbindungsstrecke (4) ein Maximalstrom (I_{M}) bestimmt ist,
**gekennzeichnet durch**,
Ermitteln einer bei der in das Energieübertragungsnetz (9) abgegebenen Leistung (P) verbleibenden Stromreserve (ΔI) zu dem Maximalstrom (I_{M}), Bestimmen eines Korrekturwerts (ΔP) zum Nachführen des Grenzwerts der abgegebenen Leistung (P) abhängig von der Stromreserve (ΔI).

2. Verfahren nach Anspruch 1,
**dadurch gekennzeichnet, dass**
eine Begrenzungseinrichtung (68) vorgesehen ist, die beim Erreichen des Maximalstroms I_{M} in Abhängigkeit von einem Selektionssignal einen Phasenwinkel zwischen abgegebenem Strom und Spannung des Stromnetzes so einstellt, dass vorrangig Wirkleistung oder vorrangig Blindleistung in das Energieübertragungsnetz (9) gespeist wird.

3. Verfahren nach Anspruch 2,
**dadurch gekennzeichnet, dass**
das Selektionssignal anhand einer Spannungs-Phasenwinkel-Kennlinie generiert wird.

4. Verfahren nach Anspruch 2,
**dadurch gekennzeichnet, dass**
das Selektionssignal von extern, insbesondere einem Betreiber des Energieübertragungsnetzes (9), aufgeschaltet wirkt.

5. Verfahren nach einem der Ansprüche 2 bis 4,
**gekennzeichnet durch**
Berechnen einer nachrangig einzuspeisenden Blind- oder Wirkleistung anhand der vorrangig eingespeisten Wirk-oder Blindleistung mittels einer vorgebbaren Kennlinie.

6. Verfahren nach Anspruch 5,
**dadurch gekennzeichnet, dass**
die Kennlinie durch eine elliptische Funktion mit einer normierten Darstellung 1 = P²:a² + Q²:b² gebildet ist.

7. Verfahren nach einem der Ansprüche 1 bis 6,
**gekennzeichnet durch**
Ermitteln eines Begrenzungssignals (69) und Anlegen an die Windenergieanlage (1) zur Begrenzung des von ihr abzugebenden Stroms.

8. Verfahren nach Anspruch 7,
**gekennzeichnet durch**
Einbeziehen des komplexen Widerstands der Verbindungsleitung (3) zur Windenergieanlage (1).

9. Verfahren zum Regeln eines Windparks mit einem Parkmaster (5) und mindestens einer Windenergieanlage (1),
**dadurch gekennzeichnet, dass**
der Parkmaster (5) die Leistungsregelung gemäß den Ansprüchen 1 bis 8 durchführt.

10. Verfahren nach Anspruch 9,
**dadurch gekennzeichnet, dass**
ein unterschiedlicher Wert für die Leistungskorrektur für die einzelnen Windenergieanlagen (1) ermittelt wird.

11. Verfahren nach Anspruch 10,
**dadurch gekennzeichnet, dass**
der individuelle Korrekturwert als relatives Maß in Bezug auf den maximal einspeisbaren Wirkstrom bestimmt wird.

12. Windenergieanlage mit einem mittels eines Rotors (13) angetriebenen Generator (14) und einem daran angeschlossen Umrichter (15) sowie einer Steuerung (2, 5), wobei die Steuerung (2, 5) ein Leistungsregelmodul (25, 55) aufweist, das dazu ausgebildet ist, über eine Verbindungsstrecke (4) in ein Energieübertragungsnetz (6, 9) abgegebene Leistung innerhalb eines Grenzwerts zu regeln, wobei für die Verbindungsstrecke (4) ein Maximalstrom (I_{M}) bestimmt ist,
**dadurch gekennzeichnet, dass**
das Leistungsregelmodul (25, 55) weiter dazu ausgebildet ist, eine bei der in das Energieübertragungsnetz (9) abgegebene Leistung (P) verbleibende Stromreserve (ΔI) zu dem Maximalstrom (I_{M}) zu ermitteln, und einen Korrekturwert (ΔP) zum Nachführen des Grenzwerts der abgegebenen Leistung (P) abhängig von der Stromreserve (ΔI) zu bestimmen.

13. Windenergieanlage nach Anspruch 12,
**dadurch gekennzeichnet, dass**
das Leistungsregelmodul zur Durchführung des Verfahrens nach einem der Ansprüche 2 bis 10 ausgebildet ist.

14. Windpark mit einem Parkmaster (5) und mindestens einer Windenergieanlage (1) mit einem mittels eines Rotors (13) angetriebenen Generator (14) und einem daran angeschlossenen Umrichter (15) sowie eine Steuerung (2) aufweist, wobei der Parkmaster (5) ein Leistungsregelmodul (55) aufweist zur Regelung der über eine Verbindungsstrecke (4) in ein Energieübertragungsnetz abgegebenen Leistung innerhalb eines Grenzwerts, wobei für die Verbindungsstrecke (4) ein Maximalstrom (IM) bestimmt ist,
**dadurch gekennzeichnet, dass**
das Leistungsregelmodul (55) dazu ausgebildet ist, eine bei der in das Energieübertragungsnetz (9) abgegebene Leistung (P) verbleibende Stromreserve (ΔI) zu dem Maximalstrom (I_{M}) zu ermitteln, und einen Korrekturwert (ΔP) zum Nachführen des Grenzwerts der abgegebenen Leistung (P) abhängig von der Stromreserve (ΔI) zu bestimmen.

15. Windpark nach Anspruch 14,
**dadurch gekennzeichnet, dass**
das Leistungsregelmodul weiter dazu ausgebildet ist, am unterschiedlichen Wert für die Leistungskorrektur für die einzelnen Windanlagen (1) zu ermitteln.

16. Windpark nach Anspruch 15,
**dadurch gekennzeichnet, dass**
der individuelle Korrekturwert als Maß in Bezug auf den maximalen einspeisbaren Wirkstrom bestimmt wird.

## Claims

1. Method for regulating a wind energy installation (1), which has a generator (14), which is driven by means of a rotor (13), and a converter (15), which is connected to said generator, as well as a controller (2, 5), the controller (2, 5) with a power regulation module (25, 55) regulating the power emitted via a connection path (4) into an energy transmission system (9) to within a limit value, a maximum current (I_{M}) being determined for the connection path (4),
**characterized by**
determination of a current reserve (ΔI) remaining in the case of the power (P) emitted into the energy transmission system (9) with respect to the maximum current (I_{M}), determination of a correction value (ΔP) for following the limit value of the emitted power (P) as a function of the current reserve (ΔI).

2. Method according to Claim 1,
**characterized in that**
a limitation device (68) is provided which, when the maximum current (I_{M}) is reached, sets a phase angle between the emitted current and voltage of the electrical system as a function of a selection signal in such a way that primarily active power or primarily reactive power is fed into the energy transmission system (9).

3. Method according to Claim 2,
**characterized in that**
the selection signal is generated using a voltage/phase angle characteristic.

4. Method according to Claim 2,
**characterized in that**
the selection signal is impressed externally, in particular by an operator of the energy transmission system (9).

5. Method according to one of Claims 2 to 4,
**characterized by**
calculation of a reactive power or active power to be fed secondarily using the primarily fed active or reactive power by means of a predeterminable characteristic.

6. Method according to Claim 5,
**characterized in that**
the characteristic is formed by an elliptical function with a standardized representation 1 = P²:a² + Q²:b².

7. Method according to one of Claims 1 to 6,
**characterized by**
determination of a limitation signal (69) and application thereof to the wind energy installation (1) for the purpose of limiting the current to be emitted by it.

8. Method according to Claim 7,
**characterized by**
inclusion of the complex impedance of the connecting line (3) to the wind energy installation (1).

9. Method for regulating a wind farm with a wind farm master (5) and at least one wind energy installation (1),
**characterized in that**
the wind farm master (5) carries out the power regulation according to Claims 1 to 8.

10. Method according to Claim 9,
**characterized in that**
a different value for the power correction is determined for the individual wind energy installations (1).

11. Method according to Claim 10,
**characterized in that**
the individual correction value is determined as a relative measure in relation to the maximum active current which can be fed.

12. Wind energy installation with a generator (14), which is driven by means of a rotor (13), and a converter (15), which is connected to said generator, as well as a controller (2, 5), the controller (2, 5) having a power regulation module (25, 55), which is designed to regulate power emitted via a connection path (4) into an energy transmission system (6, 9) to within a limit value, a maximum current (I_{M}) being determined for the connection path (4),
**characterized in that**
the power regulation module (25, 55) is further designed to determine a current reserve (ΔI) remaining in the case of the power (P) emitted into the energy transmission system (9) with respect to the maximum current (I_{M}), and to determine a correction value (ΔP) for following the limit value of the emitted power (P) as a function of the current reserve (ΔI).

13. Wind energy installation according to Claim 12,
**characterized in that**
the power regulation module is designed to carry out the method according to one of Claims 2 to 10.

14. Wind farm with a wind farm master (5) and at least one wind energy installation (1) with a generator (14), which is driven by means of a rotor (13), and a converter (15), which is connected to said generator, as well as a controller (2), the wind farm master (5) having a power regulation module (55) for regulating the power emitted via a connection path (4) into an energy transmission system to within a limit value, a maximum current (I_{M}) being determined for the connection path (4),
**characterized in that**
the power regulation module (55) is designed to determine a current reserve (ΔI) remaining in the case of the power (P) emitted into the energy transmission system (9) with respect to the maximum current (I_{M}) and to determine a correction value (ΔP) for following the limit value of the emitted power (P) as a function of the current reserve (ΔI).

15. Wind farm according to Claim 14,
**characterized in that**
the power regulation module is furthermore designed to determine the different value for the power correction for the individual wind installations (1).

16. Wind farm according to Claim 15,
**characterized in that**
the individual correction value is determined as a measure in relation to the maximum active current which can be fed.

## Revendications

1. Procédé pour régler une installation d'énergie éolienne (1) qui comporte un générateur (14) entraîné au moyen d'un rotor (13) et un convertisseur (15) branché sur le générateur ainsi qu'une commande (2, 5), la commande (2, 5) réglant avec un module de réglage de puissance (25, 55) la puissance fournie au moyen d'une voie de connexion (4) dans un réseau de distribution d'énergie (9) en deçà d'une valeur limite, un courant maximal (I_{M}) étant déterminé pour la voie de connexion (4),
**caractérisé par**
l'identification, par rapport au courant maximal (I_{M}), d'une réserve de courant (ΔI) restant de la puissance fournie (P) dans le réseau de distribution d'énergie (9), et la détermination d'une valeur de correction (ΔP) pour asservir la valeur limite de la puissance fournie (P) en fonction de la réserve de courant (ΔI).

2. Procédé selon la revendication 1,
**caractérisé en ce qu'**il
est prévu un dispositif de limitation (68) qui, lorsque le courant maximal I_{M} est atteint, règle, en fonction d'un signal de sélection, un angle de phase entre le courant fourni et la tension du réseau électrique de sorte que, en premier lieu la puissance active ou en premier lieu la puissance réactive soit introduite dans le réseau de distribution d'énergie (9).

3. Procédé selon la revendication 2,
**caractérisé en ce que**
le signal de sélection est généré à l'aide d'une courbe caractéristique tension-angle de phase.

4. Procédé selon la revendication 2,
**caractérisé en ce que**
le signal de sélection est désactivé de manière externe, en particulier par un exploitant du réseau de distribution d'énergie (9).

5. Procédé selon l'une des revendications 2 à 4,
**caractérisé par**
le calcul d'une puissance réactive ou active à fournir en second lieu à l'aide de la puissance réactive ou active fournie en premier lieu au moyen d'une courbe caractéristique pouvant être prédéfinie.

6. Procédé selon la revendication 5,
**caractérisé en ce que**
la courbe caractéristique est formée par une fonction elliptique ayant la représentation normée 1 = P²/a² + Q²/b².

7. Procédé selon l'une des revendications 1 à 6,
**caractérisé par**
la détermination d'un signal de limitation (69) et son application à l'installation d'énergie éolienne (1) afin de limiter le courant fourni par cette dernière.

8. Procédé selon la revendication 7,
**caractérisé par**
la mise à contribution de la résistance complexe de la ligne de connexion (3) à l'installation d'énergie éolienne (1).

9. Procédé pour régler un parc éolien avec un maître de parc (5) et au moins une installation d'énergie éolienne (1),
**caractérisé en ce que**
le maître de parc (5) effectue la régulation de puissance selon les revendications 1 à 8.

10. Procédé selon la revendication 9,
**caractérisé en ce que**
une valeur différente pour la correction de puissance est identifiée pour les différentes installations d'énergie éolienne (1).

11. Procédé selon la revendication 10,
**caractérisé en ce que**
la valeur de correction individuelle est déterminée en tant que grandeur relative par rapport au courant actif maximal pouvant être fourni.

12. Installation d'énergie éolienne comportant un générateur (14) entraîné au moyen d'un rotor (13) et un convertisseur (15) branché sur le générateur ainsi qu'une commande (2, 5), la commande (2, 5) comportant un module de réglage de puissance (25, 55) qui est conçu pour régler en deçà d'une valeur limite la puissance fournie dans un réseau de distribution d'énergie (6, 9) au moyen d'une voie de connexion (4), un courant maximal (I_{M}) étant déterminé pour la voie de connexion (4),
**caractérisée en ce que**
le module de régulation de puissance (25, 55) est conçu en outre pour identifier, par rapport au courant maximal (I_{M}), une réserve de courant (ΔI) restant de la puissance fournie (P) dans le réseau de distribution d'énergie (9), et pour déterminer une valeur de correction (ΔP) pour asservir la valeur limite de la puissance fournie (P) en fonction de la réserve de courant (ΔI).

13. Installation d'énergie éolienne selon la revendication 12,
**caractérisée en ce que**
le module de réglage de puissance est conçu pour exécuter le procédé selon l'une des revendications 2 à 10.

14. Parc éolien comportant un maître de parc (5) et au moins une installation d'énergie éolienne (1) comprenant un générateur (14) entraîné au moyen d'un rotor (13) et un convertisseur (15) connecté au générateur ainsi qu'une commande (2), le maître de parc (5) comportant un module de réglage de puissance (55) permettant de régler en deçà d'une valeur limite la puissance fournie au réseau de distribution d'énergie au moyen d'une voie de connexion (4), un courant maximal (I_{M}) étant déterminé pour la voie de connexion (4),
**caractérisé en ce que**
le module de réglage de puissance (55) est conçu pour identifier, par rapport au courant maximal (I_{M}), une réserve de courant (ΔI) restant de la puissance fournie (P) dans le réseau de distribution d'énergie (9) et pour déterminer, en fonction de la réserve de courant (ΔI), une valeur de correction (ΔP) pour asservir la valeur limite de la puissance fournie (P).

15. Parc éolien selon la revendication 14,
**caractérisé en ce que**
le module de réglage de puissance est en outre conçu pour identifier une valeur différente pour la correction de puissance pour les différentes installations éoliennes (1).

16. Parc éolien selon la revendication 15,
**caractérisé en ce que**
la valeur de correction individuelle est déterminée en tant que grandeur par rapport au courant actif maximal pouvant être fourni.
